# EUROPEAN PATENT APPLICATION

(11) **EP 1 944 499 A1**
(43) Date of publication of application: **16.07.2008**
(21) Application number: 07250142.2
(22) Date of filing: 15.01.2007
(51) Int. Cl.: F02M 37/22

(54) **Safety filter**

(71) Applicant: Delphi Technologies, Inc., Troy, Michigan 48007 (US)
(72) Inventor: Marx, Patrice, 54650 Saulnes (FR); Soubiran, Patrick, 4170 Esch-Sur-Alzette (LU)
(74) Representative: Waller, Stephen

(57) **Abstract**

A fuel filter assembly for a fuel module, said assembly comprising a housing (1) defining a chamber (2) adapted to receive a fuel filter (4), said fuel filter comprising a tube of filter material having first and second end caps (8,12), said chamber being provided with a detachable closure means to permit replacement of the fuel filter, said closure means being integrally formed with one of said first and second end caps (8,12) of the fuel filter, at least said one of said first and second end caps (8,12) having an outlet port (32) formed therein.

## Description

The present invention relates to a fuel filter assembly and in particular to a fuel filter assembly for a fuel module for supplying fuel to the fuel system of a vehicle.

Typically fuel is delivered from a fuel tank of a vehicle to the fuel system of an engine by means of a fuel pump. The fuel delivery circuit also typically includes a fuel filter downstream of the fuel pump and a fuel pressure regulator to regulate the fuel pressure downstream of the pump. Smaller vehicles, such as motorcycles, scooters and snow mobiles, and small watercraft, such as jet skis, have often relied on more simple fuel delivery systems, often using gravity to deliver fuel from a fuel tank to the fuel system, e.g. one or more carburettors, of the engine. Fuel injection systems are commonly replacing carburettors in such small vehicle applications, requiring higher fuel pressure than can be provided by a simple gravity feed, thus requiring a fuel pump, and requiring a fuel filter downstream of the fuel pump to ensure that particulate contamination within the fuel cannot enter the fuel injectors and other sensitive fuel delivery components.

Typically in larger vehicles, such as cars or trucks, the fuel module, including the fuel pump, is provided within the fuel tank and the size, weight and packaging of the fuel delivery system is not particularly constrained due to the overall volume of the fuel tank and the size of the vehicle. However, in smaller vehicle applications, the small volume of the fuel tank and difficulties in providing access to the interior of the tank can makes the location of the fuel pump within the tank disadvantageous as it causes a significant reduction in the overall fuel capacity of the fuel tank and difficult assembly and maintenance procedures. Furthermore, strict packaging and weight constraints place limitations on the design, size and weight of inline fuel delivery components for use in such applications, rendering systems typically used for larger vehicles, such as cars, unsuitable.

European patent application No. 06255558.6 discloses a fuel delivery module for a small vehicle comprises a housing defining a hollow body 2 having first and second ends caps 4,6 releasably secured to respective ends of the body 2 to form a closed, fuel tight assembly. The housing defines a first chamber 8 adapted to receive a fuel pump 30, a second chamber 10 adapted to receive a fuel filter 60 and a third chamber 12 adapted to receive a fuel pressure regulator 90. The housing is formed from a plastic material.

The fuel filter 60 is located within the second chamber 10 to filter fuel from the first chamber 8 before it can pass out through the fuel outlet 16 or into the pressure regulator. The end cap 6 of the housing is readily detachable by means of the releasable fastening means 20 to enable replacement of the filter 60, when required.

When changing the fuel filter in a contaminated atmosphere, such as a vehicle retailer's workshop, there is a risk that loose contaminants, such as dust, swarf or other solid particles, can contaminate the inner surfaces of the detachable end cap of the housing, such contaminants subsequently being permitted to enter the housing and the fuel filter once the end cap has been replaced, potentially leading to failure of the fuel components, in particular the fuel pressure regulator downstream of an inner end of the fuel filter,

According to the present invention there is provided a fuel filter assembly for a fuel module, said assembly comprising a housing defining a chamber adapted to receive a fuel filter, said fuel filter comprising a tube of filter material having first and second end caps, said chamber being provided with a detachable closure means to permit replacement of the fuel filter, said closure means being integrally formed with one of said first and second end caps of the fuel filter, at least said one of said first and second end caps having an outlet port formed therein.

By forming the housing end cap integrally with the fuel filter (i.e. as part of the replacement service component) the possibility of contaminants entering the housing during replacement of the fuel filter is greatly reduced.

Preferably the other of said first and second end caps is formed with a peripheral lip adapted to seal against the inner walls of the chamber to create a particulate seal, thus providing a barrier to any contamination that may have entered the chamber during replacement of the fuel filter from reaching the remaining components of the fuel module, such as the pressure regulator.

A pipe connector may be provided on the closure means for connection to a fuel pipe, said pipe connector communicating with an interior of the fuel filter via said aperture of the end cap of which the closure means comprises an integral part.

In a preferred embodiment, a fuel pump is provided within said housing. A fuel pressure regulator may also be provided within said housing.

Preferably said detachable closure means is provided by a detachable end cap of the housing. Fastening means may be provided for fastening the detachable housing end cap onto the housing.

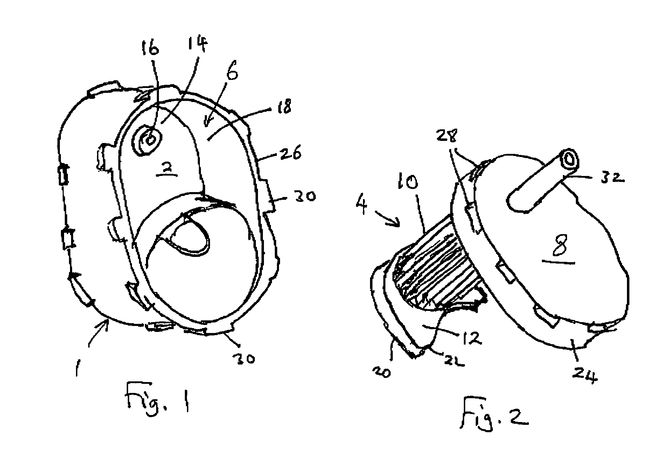

An embodiment of the present invention will now be described by way of example only with reference to the accompanying drawings, in which:-
Fig. 1 is a perspective view of a housing of a fuel filter assembly according to a preferred embodiment of the present invention;
Fig. 2 is a perspective view of a fuel filter with integral housing end cap according to the preferred embodiment of the present invention.

As illustrated in the drawings, the fuel filter assembly according to a preferred embodiment of the present invention comprises a housing 1 having a chamber or recess 2 for receiving a fuel filter 4, said housing 1 having an opening 6 for insertion and removal of the fuel filter 4 and an end cover 8 for closing said opening.

The fuel filter 4 comprises a cylindrical tube of pleated paper, defining a filtering media 10, which is disposed between two opposed end caps. A perforated metal or plastic central support tube (not shown) may be provided concentrically inside the filtering media 10 to provide radial support to the filtering media 10. Each end cap is provided with an outlet aperture whereby fuel can flow from the chamber 2, radially inwardly through the filtering media 10 and axially out through the end caps of the fuel filter.

An inner end cap 12 is adapted to engage an inner wall 14 of the chamber 2 such the outlet aperture (not shown) of the inner end cap 12 engages an aperture 16 in said inner wall 14 leading to a further portion of the housing 1, possibly containing a fuel pressure regulator for controlling the flow of excess fuel back to a fuel supply/low pressure fuel feed. A peripheral outer edge of the inner end cap 12 is adapted to engage inner side walls 18 of the chamber 2. The peripheral outer edge of the inner end cap is 10 formed with two axially spaced resilient peripheral lips 20,22 to form a seal against the inner side walls 18 of the chamber 2.

An outer end cap of the fuel filter Is integrally formed with the end cover 8 of the housing 1, said end cover 8 having an outer lip 24 adapted to fit over a peripheral edge 26 of the opening 6 of the housing 1. Apertures 28 are provided in said outer lip 24 of the end cover 8 adapted to receive ramped projections 30 around the peripheral edge 26 of the housing 1 to enable the end cover 8 to be secured to the housing 1.

An axially extending pipe connection stub 32 is formed on the end cover 8 communicating with the interior of the fuel filter 4 whereby a fuel delivery pipe can be connected to the connection stub 32 to deliver fuel from the fuel filter assembly to the fuel system of the vehicle.

Preferably the housing 1 and end cover 8 are formed from a fuel resistant plastic.

By forming the end cover 8 integrally with the fuel filter 4, such that the end cover 8 is replaced with the fuel filter 4, the risk of contamination of the interior of the housing 1 when replacing the fuel filter 4 is a contaminated environment is minimised.

Various modifications and variations to the described embodiment of the inventions will be apparent to those skilled in the art without departing from the scope of the invention as defined in the appended claims. Although the invention has been described in connection with a specific preferred embodiment, it should be understood that the invention as claimed should not be unduly limited to such specific embodiment.

## Claims

1. A fuel filter assembly for a fuel module, said assembly comprising a housing defining a chamber adapted to receive a fuel filter, said fuel filter comprising a tube of filter material having first and second end caps, said chamber being provided with a detachable closure means to permit replacement of the fuel filter, said closure means being integrally formed with one of said first and second end caps of the fuel filter, at least said one of said first and second end caps having an outlet port formed therein.

2. A fuel filter assembly as claimed in claim 1, wherein the other of said first and second end caps is formed with a peripheral lip adapted to seal against the inner walls of the chamber to create a particulate seal.

3. A fuel filter assembly as claimed in claim 1 or claim 2, wherein a pipe connector is provided on the closure means for connection to a fuel pipe, said pipe connector communicating with an interior of the fuel filter via said aperture of the end cap of which the closure means comprises an integral part.

4. A fuel filter assembly as claimed in any preceding claim, wherein a fuel pump is provided within said housing.

5. A fuel filter assembly as claimed in any preceding claim, wherein a fuel pressure regulator is provided within said housing.

6. A fuel filter assembly as claimed in any preceding claim, wherein said detachable closure means is provided by a detachable end cap of the housing.

7. A fuel filter as claimed in claim 6, wherein fastening means are provided for fastening the detachable housing end cap onto the housing.
